# EUROPÄISCHE PATENTSCHRIFT

(11) **EP 2 710 254 B1**
(45) Veröffentlichungstag und Bekanntmachung des Hinweises auf die Patenterteilung: **21.06.2017**
(21) Anmeldenummer: 12719272.2
(22) Anmeldetag: 30.04.2012
(51) Int. Cl.: F02N 11/08, H02J 7/14, B60R 16/03

(54) **KRAFTFAHRZEUGBORDNETZ UND VERFAHREN ZUM BETREIBEN EINES KRAFTFAHRZEUGBORDNETZES**
MOTOR VEHICLE ELECTRICAL SYSTEM AND METHOD FOR OPERATING A MOTOR VEHICLE ELECTRICAL SYSTEM
RÉSEAU DE BORD DE VÉHICULE À MOTEUR ET PROCÉDÉ POUR FAIRE FONCTIONNER UN RÉSEAU DE BORD DE VÉHICULE À MOTEUR

(30) Priorität: 14.05.2011 DE 102011101531
(43) Veröffentlichungstag der Anmeldung: 26.03.2014
(73) Patentinhaber: Volkswagen Aktiengesellschaft, 38436 Wolfsburg (DE)
(72) Erfinder: KLINKIG, Andreas, 38162 Cremlingen (DE); FLEISCHER, Rainer, 38444 Wolfsburg (DE)
(86) Internationale Anmeldenummer: PCT/EP2012/001865
(87) Internationale Veröffentlichungsnummer: WO 2012/156028

(56) Entgegenhaltungen:
- DE-A1-102004 036 042
- DE-A1-102008 054 706
- DE-A1-102008 054 885

## Beschreibung

Die Erfindung betrifft ein Kraftfahrzeugbordnetz und ein Verfahren zum Betreiben eines Kraftfahrzeugbordnetzes.

Moderne Kraftfahrzeuge werden augrund der Problematik des CO₂-Ausstoßes im Leerlauf zunehmend mit einer Start-Stopp-Funktion ausgestattet. Bei einer Start-Stopp-Funktion wird der Motor z. B. beim Anhalten des Fahrzeuges an einer Ampel ausgeschaltet, um Kraftstoff zu sparen und CO₂-Emissionen zu reduzieren. Zum Weiterfahren wird der Motor über den Starter wieder gestartet. Da der Starter zum Losreißen des Motors bis zu 800 A Strom zieht, fällt am Innenwiderstand der Fahrzeugbatterie eine Spannung von bis zu 6 V ab. Die verfügbare Klemmspannung im Bordnetz fällt also kurzzeitig auf 12 V - 6 V = 6 V ab. Neben dem Start-Stopp-Betrieb an Ampeln ist es auch bereits bekannt, den Motor (Verbrennungskraftmaschine) auch bei fahrendem Kraftfahrzeug bei Nichtgebrauch ausschalten zu können ("Freilauf Motor aus"; "Start-Stopp on the move"). Auf jeden Fall ist ein Wiederstarten des Kraftfahrzeuges zu gewährleisten.

Aus der DE 10 2008 054 885 A1 ist eine Vorrichtung zum Steuern einer Energieversorgung eines Bordnetzes eine Fahrzeuges bekannt, an das Verbraucher anschließbar sind, umfassend einen ersten Energiespeicher zum Bereitstellen von elektrischer Energie an einem Starter, einen Generator zum Erzeugen einer Generatorspannung und ein erstes steuerbares Schaltelement, das zwischen dem ersten Energiespeicher und dem Generator vorgesehen ist, und das derart ausgebildet ist, dass es im Betrieb des Fahrzeuges einen Stromfluss nur in eine Richtung von dem ersten Energiespeicher zu dem Generator zulässt. Das Schaltelement kann dabei auch noch einen weiteren Schaltzustand aufweisen, bei dem sich das Schaltelement wie ein Leiter verhält. Vorzugsweise handelt es sich bei dem steuerbaren Schaltelement um einen Feldeffekt-Transistor, insbesondere einen MOSFET. Da sich Feldeffekt-Transistoren mit geringen Gate-Spannungen und minimaler Zeitverzögerung schalten lassen, kann somit schnell auf Änderungen des Stromflusses über das steuerbare Schaltelement oder starken Spannungsfluktuationen im Bordnetz reagiert werden. Beispielsweise kann ein Feldeffekt-Transistor oder parallel geschaltete Feldeffekt-Transistoren so angeordnet werden, dass die Durchlassrichtung seiner intrinsischen Diode oder Dioden der Richtung von dem ersten Energiespeicher zu dem Generator entspricht. Somit ist sichergestellt, dass, wenn der Transistor gesperrt ist, kein Stromfluss von dem Generator zu dem ersten Energiespeicher erfolgen kann. Andererseits kann auch bei gesperrtem Transistor ein Teil des von dem ersten Energiespeicher zu dem Bordnetz fließenden Stroms durch die intrinsischen Dioden der Feldeffekt-Transistoren fließen. Weiter umfasst die Vorrichtung einen weiteren Energiespeicher zum Bereitstellen von elektrischer Energie an die Verbraucher, der derart angeordnet ist, dass das erste steuerbare Schaltelement zwischen einerseits dem ersten Energiespeicher und andererseits dem Generator und dem weiteren Energiespeicher angeordnet ist. Weiter ist eine Ladeschaltung vorgesehen, wobei die Ladeschaltung im Betrieb des Fahrzeugs derart ausgebildet ist, dass der erste Energiespeicher auf eine Spannung UE1 aufgeladen wird, die gleich oder größer als die Spannung des zweiten Energiespeichers UE2 ist und kleiner ist als die Spannung des Generators. Der erste Energiespeicher ist vorzugsweise als Doppelschicht-Kondensator und der zweite Energiespeicher als Batterie ausgebildet. Der erste Energiespeicher liefert elektrische Energie an den Starter für einen Warmstart und/oder dämpft Spannungsfluktuationen durch die Verbraucher, wobei der zweite Energiespeicher bei einem Kaltstart elektrische Energie für den Starter bereitstellt.

Der Erfindung liegt das technische Problem zugrunde, ein gattungsgemäßes Kraftfahrzeugbordnetz mit einem Start-Stopp-Betrieb auszubilden sowie ein Verfahren zum Betreiben eines solchen Kraftfahrzeugbordnetzes zur Verfügung zu stellen.

Die Lösung des technischen Problems ergibt sich durch die Gegenstände mit den Merkmalen der Patentansprüche 1 und 6. Weitere vorteilhafte Ausgestaltungen der Erfindung ergeben sich aus den Unteransprüchen.

Hierzu umfasst das Kraftfahrzeugbordnetz einen Starter für eine Brennkraftmaschine und einen ersten Energiespeicher, die in einem ersten Bereich des Kraftfahrzeugbordnetzes angeordnet sind, und einen Generator und einen zweiten Energiespeicher, die in einem zweiten Bereich des Kraftfahrzeugbordnetzes angeordnet sind, wobei zwischen dem ersten und dem zweiten Bereich des Kraftfahrzeugbordnetzes ein Schaltelement angeordnet ist, das mindestens zwei Schaltzustände aufweist, wobei in einem ersten Schaltzustand ein Stromfluss nur in Richtung vom ersten Bereich zum zweiten Bereich möglich ist oder der Stromfluss in beiden Richtungen unterbrochen ist und in einem zweiten Schaltzustand der erste und zweite Bereich miteinander durchverbunden sind. Dabei ist das Schaltelement durch mindestens eine erste zugeordnete Steuereinheit ansteuerbar, wobei der zweite Energiespeicher über einen DC/DC-Wandler mit dem Generator verbunden ist.

Mittels der Steuereinheit ist ein Start-Stopp-Befehl für die Brennkraftmaschine erfassbar oder ermittelbar, wobei bei Erfassung oder Ermittlung eines Start-Stopp-Befehls das Schaltelement in den ersten Schaltzustand geschaltet wird bzw. ein Steuerbefehl zur Schaltung in den ersten Schaltzustand erzeugt wird. Durch eine (gegebenenfalls zweite) Steuereinheit wird mittels eines Steuerbefehls die Spannung an dem DC/DC-Wandler-Ausgang, der mit dem Schaltelement verbunden ist, erhöht, wobei eine Messeinheit die Spannungslage über dem Schaltelement erfasst und auswertet, wobei in Abhängigkeit der Auswertung der Start-Stopp-Befehl durch eine (gegebenenfalls dritte) Steuereinheit mittels eines Steuerbefehls durchgeführt wird oder nicht. Hierdurch kann mit einfachen Mitteln sichergestellt werden, dass ein Start-Stopp-Befehl nur durchgeführt wird, wenn die Wiederstartfähigkeit der Brennkraftmaschine sichergestellt ist und/oder Rückwirkungen auf das übrige Kraftfahrzeugbordnetz, insbesondere im zweiten Bereich, gering sind. Die Rückwirkungen werden erfindungsgemäß durch den ersten Schaltzustand des Schaltelements verhindert. Aufgrund des hohen Starterstromes kann es zu Spannungseinbrüchen an der Starterbatterie kommen, die im zweiten Schaltzustand auch zu Spannungseinbrüchen im zweiten Bereich führen würden. Durch die Erhöhung der Spannung am Ausgang des DC/DC-Wandlers wird zweierlei erreicht. Zum einen wird der zweite Bereich weiter stabilisiert, da die Glättungswirkung der Starterbatterie im ersten Schaltzustand entfällt, was zu einer höheren Welligkeit der Spannung führen kann. Durch die vorsorgliche Erhöhung der Spannung am Ausgang des DC/DC-Wandlers werden Spannungseinbrüche kompensiert. Zum anderen bewirkt die temporäre Erhöhung, dass bei ordnungsgemäßer Funktion eine Spannungsdifferenz über dem Schaltelement abfallen muss, da die Spannung am Ausgang des DC/DC-Wandlers größer als die Nennspannung der Starterbatterie ist.

Aufgrund der Spannungslage über dem Schaltelement kann dann einerseits geprüft werden, ob das Schaltelement sich überhaupt im ersten Schaltzustand befindet und ob die Starterbatterie in der Lage ist, die Brennkraftmaschine wieder zu starten. Ist die Wiederstartfähigkeit nicht gewährleistet, so unterbleibt die Durchführung des Start-Stopp-Befehls.

In einer Ausführungsform sind einzelne oder alle Steuereinheiten (erste, zweite und dritte Steuereinheit) in einer gemeinsamen Steuereinheit integriert. Ebenso kann die Messeinheit in eine der Steuereinheiten oder die eine gemeinsame Steuereinheit integriert sein. Der Start-Stopp-Befehl kann dabei entweder durch die eine Steuereinheit des Kraftfahrzeugbordnetzes oder durch eine der Steuereinheiten des Kraftfahrzeugbordnetzes generiert werden oder durch ein übergeordnetes Energiemanagement oder ein Motorsteuergerät generiert und an die Steuereinheit übermittelt und von dieser erfasst werden.

In einer weiteren Ausführungsform ist das Schaltelement als Leistungshalbleiterschalter, Leistungs-Relais oder als Leistungs-Relais mit paralleler Diode ausgebildet. Der Leistungshalbleiterschalter ist dabei beispielsweise als MOSFET oder IGBT ausgebildet, die jeweils mindestens eine intrinsische Diode aufweisen. Die Diode bewirkt dabei den gerichteten Stromfluss im ersten Schaltzustand.

In einer weiteren Ausführungsform wird durch die Messeinheit die Spannung und/oder der Spannungsgradient erfasst und ausgewertet. Die nominelle Spannung ist dabei einerseits ein Maß, ob überhaupt der erste Schaltzustand eingestellt wurde, denn wenn keine Spannungsdifferenz auftritt, spricht dies für eine Durchverbindung (zweiter Schaltzustand). Bei größeren Spannungsdifferenzen kann auf eine Unterbrechung in der Starterbatterie oder der Zuleitung der Starterbatterie geschlossen werden. Über den Gradienten kann beispielsweise auf einen internen Zellschluss in der Starterbatterie oder eine Polklemmenkorrosion geschlossen werden. Der Gradient bezieht sich dabei auf die zeitliche Änderung des Potentials an der Starterbatterie.

In einer weiteren Ausführungsform wird eine Nichtdurchführung eines Start-Stopp-Befehls signalisiert, beispielsweise auf einer Anzeigeeinheit angezeigt, so dass sich der Kraftfahrzeugführer darauf einstellen kann, das einmal abgestellte Kraftfahrzeug nicht wieder starten zu können.

In einer weiteren Ausführungsform wird bei einem festgestellten Defekt der Starterbatterie und der Nichtdurchführung des Start-Stopp-Befehls das Schaltelement im ersten Schaltzustand belassen.

In einer weiteren Ausführungsform ist eine Soll- bzw. Nennspannung des zweiten Energiespeichers größer als eine Soll- bzw. Nennspannung des ersten Energiespeichers (Starterbatterie).

Der erste Energiespeicher kann beispielsweise als Blei-Säure-Batterie oder Li-Ionen-Batterie ausgebildet sein. Der zweite Energiespeicher kann beispielsweise aus Doppelschicht-Kondensatoren oder Li-Ionen-Zellen ausgebildet sein, wobei letztere wegen ihrer hohen Energiedichte Vorteile aufweisen.

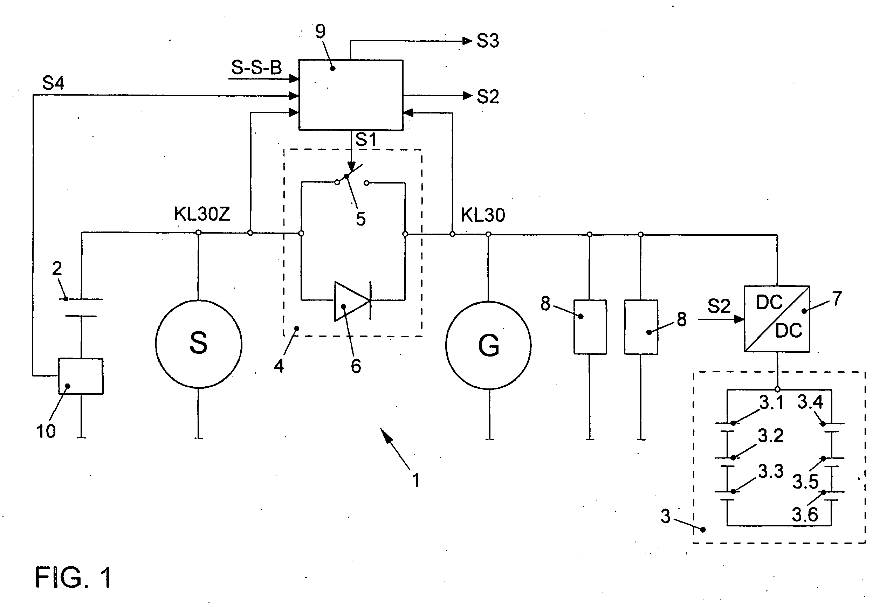

Die Erfindung wird nachfolgend anhand eines bevorzugten Ausführungsbeispiels näher erläutert. Die einzige Figur zeigt ein schematisches Blockschaltbild eines Kraftfahrzeugbordnetzes.

Das Kraftfahrzeugbordnetz 1 umfasst einen Starter S für eine nicht dargestellte Brennkraftmaschine und einen ersten Energiespeicher 2, der nachfolgend auch als Starterbatterie 2 bezeichnet wird. Der Starter S und die Starterbatterie 2 sind in einem ersten Bereich des Kraftfahrzeugs 1 angeordnet. Weiter umfasst das Kraftfahrzeugbordnetz 1 einen Generator G und einen zweiten Energiespeicher 3, die in einem zweiten Bereich des Kraftfahrzeugbordnetzes 1 angeordnet sind. Zwischen dem ersten und zweiten Bereich des Kraftfahrzeugbordnetzes 1 ist ein Schaltelement 4 angeordnet, das mindestens zwei Schaltzustände aufweist, wobei in einem ersten Schaltzustand ein Stromfluss nur in Richtung vom ersten Bereich zum zweiten Bereich möglich ist und in einem zweiten Schaltzustand der erste und zweite Bereich miteinander durchverbunden sind. Das Schaltelement 4 ist in der Figur durch einen Schalter 5 und eine parallel geschaltete Diode 6 dargestellt und ist beispielsweise als MOSFET ausgebildet, der leitend wie ein geschlossener Schalter 5 wirkt und im gesperrten Zustand aufgrund seiner intrinsischen Diode wie die Diode 6 wirkt. Der zweite Energiespeicher 3 ist über einen DC/DC-Wandler 7 mit dem Generator G bzw. dem Schaltelement 4 verbünden. Dabei ist vorzugsweise die Nennspannung des zweiten Energiespeichers 3 größer als die Nennspannung der Starterbatterie 2. Der DC/DC-Wandler 7 arbeitet daher in Richtung Generator als Abwärts-Wandler und in Richtung zweiter Energiespeicher 3 als Aufwärts-Wandler. Weiter sind in dem zweiten Bereich des Kraftfahrzeugsbordnetzes 1 elektrische Verbraucher 8 angeordnet, die beispielsweise Lichtquellen, Steuergeräte, eine elektromechanische Lenkung und/oder eine elektromechanische Bremse sein können. Der zweite Energiespeicher 3 besteht in der dargestellten Ausführungsform aus einer Vielzahl von Zellen 3.1-3.6, die teilweise parallel und teilweise in Reihe geschaltet sind, um die Nennspannung bei gewünschter Kapazität zu realisieren. Schließlich umfasst das Kraftfahrzeugbordnetz 1 eine Steuereinheit 9, die beispielsweise in ein Bordnetzsteuergerät integriert ist sowie ein Batteriemanagementmodul 10, das zwischen der Starterbatterie 2 und Masse liegt.

Im normalen Betrieb wird die Brennkraftmaschine durch den Starter S zunächst gestartet. Dabei ist der Schalter 5 wie dargestellt offen. Die laufende Brennkraftmaschine treibt dann unter anderem den Generator G an, der die Bordnetzverbraucher 8 versorgt. Des Weiteren wird über den als Aufwärts-Wandler betriebenen DC/DC-Wandler 7 der zweite Energiespeicher 3 geladen. Über den nach dem Start geschlossenen Schalter 5 lädt der Generator G auch die Starterbatterie 2.

Soll nun während des Fahrtbetriebes ein Start-Stopp-Vorgang durchgeführt werden, so muss sichergestellt werden, dass die abgeschaltete Brennkraftmaschine wieder gestartet werden kann. Erhält nun die Steuereinheit 9 einen Start-Stopp-Befehl S-S-B oder ermittelt diese selbst einen Start-Stopp-Befehl, so wird in einem ersten Schritt mittels eines Steuersignals S1 der Schalter 5 geöffnet. Über einen zweiten Steuerbefehl S2 der Steuereinheit 9 wird die Spannung am Ausgang des DC/DC-Wandlers 7 erhöht. Die Steuereinheit 9 vergleicht dann das Potential KL30 und KL30Z miteinander. Da die Spannung am Ausgang des DC/DC-Wandlers 7 erhöht wurde, muss bei offenem Schalter 5 sich eine Spannungsdifferenz KL30 - KL30Z = ΔU einstellen, wobei im Idealfall ΔU der Spannungserhöhung am Ausgang des DC/DC-Wandlers 7 entspricht. Ist hingegen der Spannungsabfall Null, so heißt dies, dass der Schalter 5 geschlossen ist, beispielsweise weil das Signal S1 gestört war oder das Schaltelement 4 defekt ist. Da bei geschlossenem Schalter 5 kein auf den zweiten Bereich des Kraftfahrzeugbordnetzes 1 rückwirkungsfreies Starten der Brennkraftmaschine möglich ist, kann die Steuereinheit 9 beispielsweise wie folgt reagieren: Es wird ein Steuersignal S3 erzeugt, dass der Start-Stopp-Befehl nicht durchgeführt wird. Dies wird dann vorzugsweise auch entsprechend signalisiert, beispielsweise als Fehler- bzw. Wammeldung auf einer Anzeigeeinheit. Es ist aber auch möglich, eine begrenzte Anzahl von Start-Stopp-Befehlen durchzuführen, also einen eingeschränkten Start-Stopp-Betrieb aufrechtzuerhalten. Der Start-Stopp-Befehl S-S-B kann also auch als Start-Stopp-Anfrage-Signal verstanden werden, wobei S3 dann den eigentlichen Start-Stopp-Befehl (ja oder nein) darstellt.

Sei nun angenommen, die Auswertung in der Steuereinheit 9 hat ergeben, dass eine Spannungsdifferenz vorliegt, so ist der Schalter 5 offen. Die Steuereinheit 9 wertet dann weiter die Höhe der Spannungsdifferenz aus. Ist diese größer als die Erhöhung der Spannung am Ausgang des DC/DC-Wandlers 7, so spricht dies für einen Einbruch des Potentials an KL30Z. Die Ursache kann beispielsweise eine Unterbrechung in der Starterbatterie 2 oder der Zuleitung der Starterbatterie 2 sein. In diesem Fall kann die Starterbatterie 2 die Wiederstartfähigkeit nicht gewährleisten. Die Steuereinheit 9 erzeugt dann ein Steuersignal S3, dass der Start-Stopp-Befehl nicht durchgeführt wird. Vorzugsweise bleibt der Schalter 5 offen, so dass Rückwirkungen der defekten Starterbatterie 2 auf den zweiten Bereich des Kraftfahrzeugbordnetzes 1 ausgeschlossen sind. Des Weiteren wertet die Steuereinheit 9 auch den zeitlichen Gradienten des Potentials KL30Z aus. Erfasst die Steuereinheit 9 einen kurzzeitigen Einbruch des Potentials KL30Z, das dann wieder auf die Nennspannung der Starterbatterie 2 steigt, so kann dies ein Hinweis auf einen internen Zellschluss in der Starterbatterie 2 (bei Aufbau aus einzelnen Batteriezellen) oder eine Polklemmenkorrosion sein. Auch in diesem Fall wird der Start-Stopp-Befehl nicht durchgeführt oder nur eingeschränkte durchgeführt. Der Schalter 5 kann ebenfalls offen bleiben.

Ergibt hingegen die Auswertung, dass kein Defekt an der Starterbatterie 2 vorliegt, also KL30 - KL30Z ≤ ΔU ist, so erzeugt die Steuereinheit 9 ein Steuersignal S3 zur Durchführung eines Start-Stopp-Befehls und die Brennkraftmaschine wird abgeschaltet.

Das Batteriemanagementmodul 10 erfasst die Lade- und Entladeströme der Starterbatterie 2. Daraus kann das Batteriemanagementmodul 10 beispielsweise einen Innenwiderstand der Starterbatterie 2 und/oder einen Ladezustand (SOC-state of charge) und/oder einen Alterungszustand (SOH-state of health) der Starterbatterie 2 ermitteln. Dabei kann beispielsweise aufgrund einer Veränderung des Innenwiderstandes auf einen internen Zellschluss oder ähnliche Fehler geschlossen werden. Das Batteriemanagementmodul 10 übermittelt ein Signal S4 an die Steuereinheit 9, in dem einzelne oder alle Parameter der Starterbatterie 2 berücksichtigt sind. Die Steuereinheit 9 kann dann bei ihrer Entscheidung, ob ein Start-Stopp-Befehl durchgeführt werden soll oder nicht, die Information des Signals S4 berücksichtigen und beispielsweise diesen nicht durchführen, wenn der Innenwiderstand größer als ein Schwellwert ist.

Die Funktion der Diode 6 ist dabei für das Verfahren nicht zwingend. Allerdings gewährleistete die Diode 6 eine Versorgung der Verbraucher 8, falls der DC/DC-Wandler 7 und/oder die zweite Speichereinheit einen Defekt aufweiset.

## Patentansprüche

1. Kraftfahrzeugbordnetz (1), umfassend einen Starter (S) für eine Brennkraftmaschine und einen ersten Energiespeicher (2), die in einem ersten Bereich des Kraftfahrzeugbordnetzes (1) angeordnet sind, und einen Generator (G) und einen zweiten Energiespeicher (3), die in einem zweiten Bereich des Kraftfahrzeugbordnetzes (1) angeordnet sind, wobei zwischen dem ersten und dem zweiten Bereich des Kraftfahrzeugbordnetzes (1) ein Schaltelement (4) angeordnet ist, das mindestens zwei Schaltzustände aufweist, wobei in einem ersten Schaltzustand ein Stromfluss nur in Richtung vom ersten Bereich zum zweiten Bereich möglich ist oder der Stromfluss in beide Richtungen unterbrochen ist und in einem zweiten Schaltzustand der erste und zweite Bereich miteinander durchverbunden sind, wobei das Schaltelement (4) durch mindestens eine erste zugeordnete Steuereinheit (9) mittels eines Steuersignals (S1) ansteuerbar ist,
**dadurch gekennzeichnet, dass**
der zweite Energiespeicher (3) über einen DC/DC-Wandler (7) mit dem Generator (G) verbunden ist, wobei mittels der Steuereinheit (9) ein Start-Stopp-Befehl (S-S-B) für die Brennkraftmaschine erfassbar oder ermittelbar ist, wobei bei Erfassung oder Ermittlung eines Start-Stopp-Befehls (S-S-B) das Schaltelement (4) in den ersten Schaltzustand geschaltet wird und die Spannung an dem DC/DC-Ausgang, der mit dem Schaltelement (4) verbunden ist, durch eine Steuereinheit mittels eines Steuerbefehls (S2) erhöht wird, wobei eine Messeinheit die Spannungslage über dem Schaltelement (4) erfasst und auswertet, wobei in Abhängigkeit der Auswertung der Start-Stopp-Befehl durch die Steuereinheit (9) mittels eines Steuerbefehls (S3) durchgeführt wird oder nicht.

2. Kraftfahrzeugbordnetz nach Anspruch 1, **dadurch gekennzeichnet, dass** einzelne oder alle Steuereinheiten in einer gemeinsamen Steuereinheit (9) integriert sind.

3. Kraftfahrzeugbordnetz nach Anspruch 1 oder 2, **dadurch gekennzeichnet, dass** das Schaltelement (4) als Leistungshalbleiterschalter, als Leistungsrelais oder als Leistungsrelais mit paralleler Diode ausgebildet ist.

4. Kraftfahrzeugbordnetz nach einem der vorangegangenen Ansprüche, **dadurch gekennzeichnet, dass** die Messeinheit die Spannung und/oder den Spannungsgradienten erfasst und auswertet.

5. Kraftfahrzeugbordnetz nach einem der vorangegangenen Ansprüche, **dadurch gekennzeichnet, dass** eine Sollspannung des zweiten Energiespeichers (3) größer als eine Sollspannung des ersten Energiespeichers (2) ist.

6. Verfahren zum Betreiben eines Kraftfahrzeugbordnetzes (1), wobei das Kraftfahrzeugbordnetz (1) einen Starter (S) für eine Brennkraftmaschine und einen ersten Energiespeicher (2) umfasst, die in einem ersten Bereich des Kraftfahrzeugbordnetzes (1) angeordnet sind, und einen Generator (G) und einen zweiten Energiespeicher (3) umfasst, die in einem zweiten Bereich des Kraftfahrzeugbordnetzes (1) angeordnet sind, wobei zwischen dem ersten und dem zweiten Bereich des Kraftfahrzeugbordnetzes (1) ein Schaltelement (4) angeordnet ist, das mindestens zwei Schaltzustände aufweist, mit den Schritten:
- Ansteuern des Schaltelements (4) durch mindestens eine erste zugeordnete Steuereinheit (9) mittels eines Steuerbefehls (S1),
- Schalten des Schaltelements (4) in einen ersten Schaltzustand, in dem ein Stromfluss nur in Richtung vom ersten Bereich zum zweiten Bereich möglich ist oder in beiden Richtungen unterbrochen ist, oder
- Schalten des Schaltelements (4) in einen zweiten Schaltzustand, in dem der erste und zweite Bereich miteinander durchverbunden sind,
**dadurch gekennzeichnet, dass**
der zweite Energiespeicher (3) über einen DC/DC-Wandler (7) mit dem Generator (G) verbunden ist, wobei das Verfahren folgende weitere Schritte aufweist:
- Erfassen oder Ermitteln eines Start-Stopp-Befehl (S-S-B) für die Brennkraftmaschine mittels der Steuereinheit (9),
- bei Erfassung oder Ermittlung eines Start-Stopp-Befehls (S-S-B) Schalten des Schaltelements (4) in den ersten Schaltzustand und Erhöhen der Spannung an dem DC/DC-Ausgang, der mit dem Schaltelement (4) verbunden ist, durch eine Steuereinheit mittels eines Steuerbefehls (S2),
- Erfassen und Auswerten der Spannungslage über dem Schaltelement (4) durch eine Messeinheit,
- in Abhängigkeit der Auswertung Durchführen oder Nicht-Durchführen des Start-Stopp-Befehls durch die Steuereinheit (9) mittels eines Steuerbefehls (S3).

7. Verfahren nach Anspruch 6, **dadurch gekennzeichnet, dass** anhand der Spannungslage festgestellt wird, ob das Schaltelement (4) in den ersten Schaltzustand geschaltet worden ist.

8. Verfahren nach Anspruch 6 oder 7, **dadurch gekennzeichnet, dass** die Messeinheit die Spannung und/oder den Spannungsgradienten erfasst und auswertet, wobei anhand der Spannung eine Unterbrechung in dem ersten Energiespeicher (2) oder der Zuleitung des ersten Energiespeichers (2) erfasst wird und/oder anhand des Spannungsgradienten ein interner Zellschluss und/oder eine Polklemmenkorrosion erfasst wird.

9. Verfahren nach einem der Ansprüche 6 bis 8, **dadurch gekennzeichnet, dass** eine Nichtdurchführung eines Start-Stopp-Befehls signalisiert wird.

10. Verfahren nach einem der Ansprüche 6 bis 9, **dadurch gekennzeichnet, dass** bei einem festgestellten Defekt der Starterbatterie (2) und der Nichtdurchführung des Start-Stopp-Befehls das Schaltelement (4) im ersten Schaltzustand verbleibt.

## Claims

1. Motor vehicle electrical system (1) comprising a starter (S) for an internal combustion engine and a first energy store (2), which starter and first energy store are arranged in a first region of the motor vehicle electrical system (1), and comprising a generator (G) and a second energy store (3), which generator and second energy store are arranged in a second region of the motor vehicle electrical system (1), wherein a switching element (4) is arranged between the first and the second region of the motor vehicle electrical system (1) and has at least two switching states, wherein in a first switching state current flow is possible only in the direction from the first region to the second region or the current flow is interrupted in both directions, and in a second switching state the first and second region are connected-through to one another, wherein the switching element (4) can be actuated by at least one first associated control unit (9) by means of a control signal (S1),
**characterized in that**
the second energy store (3) is connected to the generator (G) via a DC/DC converter (7), wherein a start/stop command (S-S-B) for the internal combustion engine can be detected or can be identified by means of the control unit (9), wherein, when a start/stop command (S-S-B) is detected or identified, the switching element (4) is switched to the first switching state and the voltage at the DC/DC output, which is connected to the switching element (4), is increased by a control unit by means of a control command (S2), wherein a measurement unit detects and evaluates the voltage across the switching element (4), wherein the start/stop command is executed by the control unit (9) by means of a control command (S3) or is not executed, depending on the evaluation.

2. Motor vehicle electrical system according to Claim 1, **characterized in that** individual control units or all of the control units are integrated in a common control unit (9).

3. Motor vehicle electrical system according to Claim 1 or 2, **characterized in that** the switching element (4) is in the form of a power semiconductor switch, in the form of a power relay or in the form of a power relay with a parallel diode.

4. Motor vehicle electrical system according to one of the preceding claims, **characterized in that** the measurement unit detects and evaluates the voltage and/or the voltage gradient.

5. Motor vehicle electrical system according to one of the preceding claims, **characterized in that** a setpoint voltage of the second energy store (3) is greater than a setpoint voltage of the first energy store (2).

6. Method for operating a motor vehicle electrical system (1), wherein the motor vehicle electrical system (1) comprises a starter (S) for an internal combustion engine and a first energy store (2), which starter and first energy store are arranged in a first region of the motor vehicle electrical system (1), and comprises a generator (G) and a second energy store (3), which generator and second energy store are arranged in a second region of the motor vehicle electrical system (1), wherein a switching element (4) is arranged between the first and the second region of the motor vehicle electrical system (1) and has at least two switching states, comprising the steps:
- actuation of the switching element (4) by at least one first associated control unit (9) by means of a control command (S1),
- switching of the switching element (4) to a first switching state in which current flow is possible only in the direction from the first region to the second region or is interrupted in both directions, or
- switching of the switching element (4) to a second switching state in which the first and second region are connected-through to one another,
**characterized in that**
the second energy store (3) is connected to the generator (G) via a DC/DC converter (7), wherein the method has the following further steps:
- detection or identification of a start/stop command (S-S-B) for the internal combustion engine by means of the control unit (9),
- when a start/stop command (S-S-B) is detected or identified, switching of the switching element (4) to the first switching state and increasing the voltage at the DC/DC output, which is connected to the switching element (4), by a control unit by means of a control command (S2),
- detection and evaluation of the voltage across the switching element (4) by a measurement unit,
- execution or non-execution of the start/stop command by the control unit (9) by means of a control command (S3), depending on the evaluation.

7. Method according to Claim 6, **characterized in that** the voltage is used to establish whether the switching element (4) has been switched to the first switching state.

8. Method according to Claim 6 or 7, **characterized in that** the measurement unit detects and evaluates the voltage and/or the voltage gradient, wherein an interruption in the first energy store (2) or the supply line of the first energy store (2) is detected using the voltage and/or an internal cell short-circuit and/or corrosion of a pole terminal is detected using the voltage gradient.

9. Method according to one of Claims 6 to 8, **characterized in that** non-execution of a start/stop command is indicated.

10. Method according to one of Claims 6 to 9, **characterized in that** the switching element (4) remains in the first switching state when a defect in the starter battery (2) is established and the start/stop command is not executed.

## Revendications

1. Réseau de bord de véhicule à moteur (1) comprenant un démarreur (S) destiné à un moteur à combustion interne et un premier accumulateur d'énergie (2), qui sont disposés dans une première zone du réseau de bord de véhicule à moteur (1), et un générateur (G) et un deuxième accumulateur d'énergie (3), qui sont disposés dans une deuxième zone du réseau de bord de véhicule à moteur (1), dans lequel il est prévu entre les première et deuxième zones du réseau de bord de véhicule à moteur (1) un élément de commutation (4) qui présente au moins deux états de commutation, dans lequel, dans un premier état de commutation, un flux de courant n'est possible que dans une direction allant de la première zone à la deuxième zone ou le flux de courant dans les deux directions est interrompu et, dans un deuxième état de commutation, les première et deuxième zones sont interconnectées, dans lequel l'élément de commutation (4) peut être commandé par au moins une première unité de commande (9) associée au moyen d'un signal de commande (S1),
**caractérisé en ce que** le deuxième accumulateur d'énergie (3) est relié au générateur (G) par l'intermédiaire d'un convertisseur continu/continu (7), dans lequel une instruction de démarrage-arrêt (S-S-B) destinée au moteur à combustion interne peut être détectée ou déterminée au moyen de l'unité de commande (9), dans lequel, lors de la détection ou de la détermination d'une instruction de démarrage-arrêt (S-S-B), l'élément de commutation (4) est commuté dans le premier état de commutation et la tension appliquée à la sortie continu-continu, qui est reliée à l'élément de commutation (4), est élevée par une unité de commande au moyen d'une instruction de commande (S2), dans lequel une unité de mesure détecte et évalue le niveau de tension sur l'élément de commutation (4), dans lequel l'instruction de démarrage-arrêt est exécutée ou non en fonction de l'évaluation par l'unité de commande (9) au moyen d'une instruction de commande (S3).

2. Réseau de bord de véhicule à moteur selon la revendication 1, **caractérisé en ce que** des unités de commande individuelles ou la totalité de celles-ci sont intégrées dans une unité de commande (9) commune.

3. Réseau de bord de véhicule à moteur selon la revendication 1 ou 2, **caractérisé en ce que** l'élément de commutation (4) est réalisé sous la forme d'un commutateur à semi-conducteur de puissance, sous la forme d'un relais de puissance ou sous la forme d'un relais de puissance avec diode en parallèle.

4. Réseau de bord de véhicule à moteur selon l'une quelconque des revendications précédentes, **caractérisé en ce que** l'unité de mesure détecte et évalue la tension et/ou le gradient de tension.

5. Réseau de bord de véhicule à moteur selon l'une quelconque des revendications précédentes, **caractérisé en ce qu'**une tension théorique du deuxième accumulateur d'énergie (3) est supérieure à une tension théorique du premier accumulateur d'énergie (2).

6. Procédé de mise en fonctionnement d'un réseau de bord de véhicule à moteur (1), dans lequel le réseau de bord de véhicule à moteur (1) comprend un démarreur (S) destiné à un moteur à combustion interne et un premier accumulateur d'énergie (2) qui est disposé dans une première zone du réseau de bord de véhicule à moteur (1), et comprend un générateur (G) et un deuxième accumulateur d'énergie (3), qui sont disposés dans une deuxième zone du réseau de bord de véhicule à moteur (1), dans lequel il est prévu entre les première et deuxième zones du réseau de bord de véhicule à moteur (1) un élément de commutation (4) qui présente au moins deux états de commutation, comprenant les étapes consistant à :
- commander l'élément de commutation (4) par au moins une première unité de commande (9) qui lui est associée au moyen d'une instruction de commande (S1),
- commuter l'élément de commutation (4) dans un premier état de commutation dans lequel un flux de courant n'est possible que dans une direction allant de la première zone à la deuxième zone ou est interrompue dans les deux directions, ou
- commuter l'élément de commutation (4) dans un deuxième état de commutation dans lequel les première et deuxième zones sont interconnectées l'une à l'autre, **caractérisé en ce que** le deuxième accumulateur d'énergie (3) est relié par l'intermédiaire d'un convertisseur continu/continu (7) au générateur (G), dans lequel le procédé comprend les étapes supplémentaires consistant à :
- détecter ou obtenir une instruction de démarrage-arrêt (S-S-B) pour le moteur à combustion interne au moyen de l'unité de commande (9),
- lorsqu'une instruction de démarrage-arrêt (S-S-B) est détectée ou déterminée, commuter l'élément de commutation (4) dans le premier état de commutation et élever le niveau de la tension à la sortie continu/continu qui est reliée à l'élément de commutation (4) par une unité de commande au moyen d'une instruction de commande (S2),
- détecter et évaluer le niveau de tension sur l'élément de commutation (4) à l'aide d'une unité de mesure,
- en fonction de l'évaluation, exécuter ou ne pas exécuter l'instruction de démarrage-arrêt par l'unité de commande (9) au moyen d'une instruction de commande (S3).

7. Procédé selon la revendication 6, **caractérisé en ce qu'**il est déterminé, sur la base du niveau de tension, si l'élément de commutation (4) a été amené à commuter dans le premier état de commutation.

8. Procédé selon la revendication 6 ou 7, **caractérisé en ce que** l'unité de mesure détecte et évalue la tension et/ou le gradient de tension, dans lequel une interruption dans le premier accumulateur d'énergie (2) ou la ligne d'alimentation du premier accumulateur d'énergie (2) est détectée sur la base de la tension et/ou dans lequel un court-circuit interne de cellule et/ou une corrosion des bornes polaires est/sont détecté(s) sur la base du gradient de tension.

9. Procédé selon l'une quelconque des revendications 6 à 8, **caractérisé en ce qu'**une non-exécution d'une instruction de démarrage-arrêt est signalée.

10. Procédé selon l'une quelconque des revendications 6 à 9, **caractérisé en ce que**, lorsqu'un défaut de la batterie de démarreur (2) et lorsque la non-exécution de l'instruction de démarrage-arrêt sont établis, l'élément de commutation (4) reste dans le premier état de commutation.
